# EUROPEAN PATENT APPLICATION

(11) **EP 4 707 563 A1**
(43) Date of publication of application: **11.03.2026**
(21) Application number: 24859442.6
(22) Date of filing: 13.08.2024
(51) Int. Cl.: F02C 6/18, F02C 3/22, F02C 7/00

(54) **DUCT BURNER AND GAS TURBINE SYSTEM**

(30) Priority: 28.08.2023 JP 2023137752
(71) Applicant: Mitsubishi Heavy Industries Power IDS Co., Ltd., Yokohama-shi, Kanagawa 2318715 (JP)
(72) Inventor: KOZUMA, Tomiaki, Yokohama-shi, Kanagawa 231-0012 (JP); TSUMURA, Toshikazu, Yokohama-shi, Kanagawa 231-0012 (JP); TAKASHIMA, Yohei, Yokohama-shi, Kanagawa 231-0012 (JP); HARADA, Yusuke, Yokohama-shi, Kanagawa 231-0012 (JP); IMAI, Aiko, Yokohama-shi, Kanagawa 231-0012 (JP); KABUKI, Yutaka, Yokohama-shi, Kanagawa 231-0012 (JP); TAGUCHI, Yuzo, Yokohama-shi, Kanagawa 231-0012 (JP); SEKIGUCHI, Shinichi, Yokohama-shi, Kanagawa 231-0012 (JP); TANAKA, Ryuichiro, Yokohama-shi, Kanagawa 231-0012 (JP)
(74) Representative: Henkel & Partner mbB
(86) International application number: PCT/JP2024/028866
(87) International publication number: WO 2025/047406

(57) **Abstract**

This duct burner is disposed in an exhaust-gas flow path through which exhaust gas discharged from a gas turbine flows, and comprises: at least one nozzle for jetting gas fuel into the exhaust-gas flow path; and a flame stabilizer that includes a pair of plate members that are situated opposing each other sandwiching the nozzle and, heading downstream in the exhaust-gas flow path, separate from the center axis of the nozzle. The nozzle includes: at least one auxiliary hole configured to jet gas fuel along a flame-stabilizing surface of the plate member downstream in the exhaust-gas flow path; and at least one main hole that is diametrically larger than the auxiliary hole and is configured to jet gas fuel inclined more to the nozzle center-axis side than the auxiliary hole.

## Description

### TECHNICAL FIELD

This disclosure relates to a duct burner and a gas turbine system including the duct burner.

The present application claims priority based on Japanese Patent Application No. 2023-137752 filed on August 28, 2023, the entire content of which is incorporated herein by reference.

### BACKGROUND ART

For example, as disclosed in Non-Patent Document 1, in a gas turbine cogeneration system including a gas turbine and a heat recovery steam generator, a duct burner may be installed upstream of the heat recovery steam generator to increase heat recovery in the heat recovery steam generator. The duct burner injects fuel into exhaust gas discharged from the gas turbine and uses oxygen contained in the exhaust gas for combustion heating.

### Citation List

### Non-Patent Literature

Non-Patent Document 1: Journal of IHI technologies Vol. 49, No. 2 (2009-6) P103-P107

### SUMMARY

### Problems to be Solved

However, it is not easy to achieve stable combustion in the duct burner when the oxygen concentration in the exhaust gas is low.

The present disclosure was made in view of the above, and an object thereof is to provide a duct burner that enables stable combustion.

### Solution to the Problems

In order to achieve the above object, the present disclosure provides a duct burner disposed in an exhaust gas passage through which exhaust gas discharged from a gas turbine flows, including: at least one nozzle for injecting gas fuel into the exhaust gas passage; and a flame holder including a pair of plate members disposed on opposite sides of the nozzle and extending so as to diverge from a central axis of the nozzle toward a downstream side of the exhaust gas passage. The nozzle has: at least one auxiliary hole configured to inject the gas fuel along a flame holding surface of the plate members on the downstream side of the exhaust gas passage; and at least one main hole having a larger diameter than the auxiliary hole and configured to inject the gas fuel at an inclination toward the central axis of the nozzle relative to the auxiliary hole.

### Advantageous Effects

With the duct burner of the present disclosure, stable combustion can be achieved.

### BRIEF DESCRIPTION OF DRAWINGS

FIG. 1 is a schematic configuration diagram of a gas turbine system with a duct burner according to an embodiment.
FIG. 2 is a schematic configuration diagram of a nozzle according to an embodiment.
FIG. 3 is a side cross-sectional view of the nozzle according to an embodiment (view taken along line A-A in FIG. 4).
FIG. 4 is a schematic configuration diagram of a nozzle according to an embodiment.
FIG. 5 is a schematic configuration diagram of an ignition nozzle according to an embodiment.
FIG. 6 is a schematic configuration diagram of a left nozzle and a right nozzle according to an embodiment.
FIG. 7 is a schematic configuration diagram of a nozzle according to some embodiments.
FIG. 8 is a diagram showing whether stable combustion has been achieved in a duct burner according to an embodiment.
FIG. 9 is a diagram showing whether stable combustion has been achieved in a duct burner according to another embodiment.

### DETAILED DESCRIPTION

Hereinafter, a duct burner according to embodiments of the present disclosure will be described with reference to the drawings. The following embodiments are illustrative and not intended to limit the present disclosure, and various modifications are possible within the scope of technical ideas of the present disclosure.

### <Gas turbine>

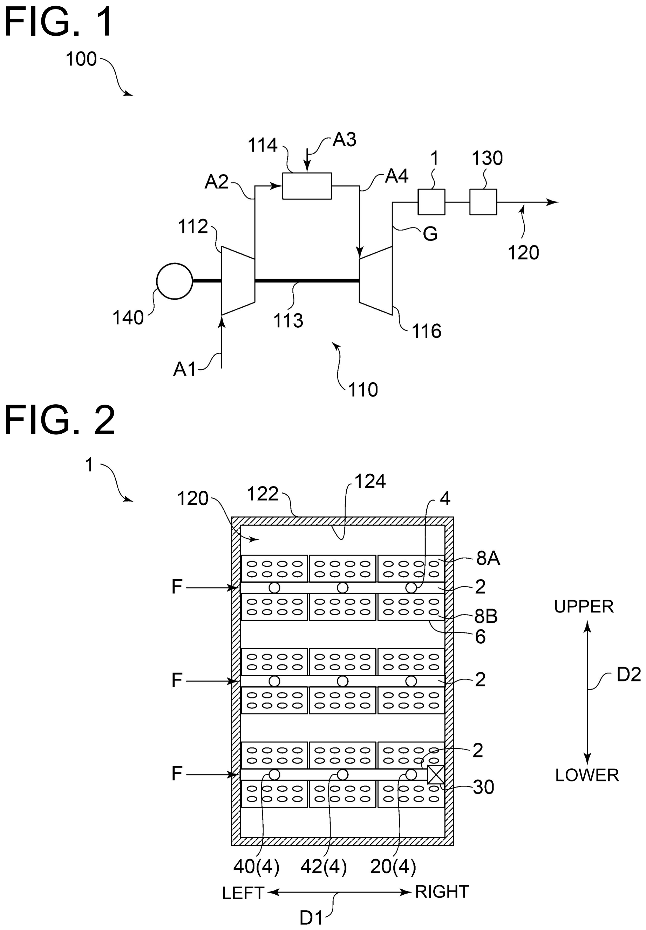

FIG. 1 is a schematic configuration diagram of a gas turbine system 100 with a duct burner 1 according to some embodiments. As shown in FIG. 1, the gas turbine system 100 includes a gas turbine 110, an exhaust gas passage 120 through which exhaust gas G discharged from the gas turbine 110 flows, a heat recovery steam generator 130 disposed in the exhaust gas passage 120, and a duct burner 1 according to some embodiments.

The gas turbine 110 includes a compressor 112, a combustor 114, and a turbine 116. The compressor 112 compresses air A1 supplied from the outside to produce compressed air A2. The combustor 114 produces combustion gas A4 by injecting fuel A3 to the compressed air A2 produced by the compressor 112 and burning the mixture. The fuel A3 may be, but is not limited to, hydrogen gas. In some embodiments, the fuel A3 is hydrocarbon gas, such as LPG or LNG.

The turbine 116 is driven to rotate with the passage of the combustion gas A4 produced by the combustor 114 and converts thermal energy of the combustion gas A4 into rotational energy. The turbine 116 is connected to the compressor 112 via a rotational shaft 113 and transmits rotational energy to the compressor 112. The compressor 112 is driven by rotational energy of the turbine 116. In the embodiment shown in FIG. 1, the gas turbine system 100 further includes a generator 140 connected to the rotational shaft 113. The generator 140 generates power from rotational energy of the turbine 116.

The exhaust gas passage 120 is defined by an inner wall surface 124 of a duct 122 of cylindrical shape (see FIG. 2). The heat recovery steam generator 130 generates steam by heating feed water using thermal energy of the exhaust gas G. The destination of the exhaust gas G that has passed through the heat recovery steam generator 130 may be for example, but is not limited to, a CO2 absorption tower, where CO2 is absorbed from the exhaust gas G into an absorption solution.

### <Duct burner>

### (Configuration)

The duct burner 1 is disposed upstream of the heat recovery steam generator 130 in the exhaust gas passage 120. FIG. 2 is a schematic configuration diagram of the duct burner 1 according to an embodiment, and the duct burner 1 is viewed from the downstream side of the exhaust gas passage 120 (front view).

In an embodiment, as shown in FIG. 2, the duct burner 1 includes a plurality of fuel supply pipes 2 extending along the lateral direction D1 in the exhaust gas passage 120. The fuel supply pipes 2 are spaced apart from each other along the vertical direction D2. Each of the fuel supply pipes 2 has a cylindrical shape, through which gas fuel F supplied from a supply source (not shown) flows. The gas fuel F may be, but is not limited to, hydrogen gas. The gas fuel F may be hydrocarbon gas, such as LPG or LNG.

The duct burner 1 includes a nozzle 4 connected to the fuel supply pipe 2 for injecting the gas fuel F into the exhaust gas passage 120, and a flame holder 6 with a pair of plate members 8A, 8B disposed on opposite sides of the nozzle 4. In an embodiment, as shown in FIG. 2, one fuel supply pipe 2 is provided with a plurality of nozzles 4 arranged along the lateral direction D1 (manifold is formed).

The pair of plate members 8A, 8B is arranged along the vertical direction D2 and includes an upper plate member 8A and a lower plate member 8B located below the upper plate member 8A. The upper plate member 8A and the lower plate member 8B are connected to a common nozzle 4. The upper plate member 8A and the lower plate member 8B are arranged so that they overlap at least partially in the lateral direction D1 when viewed from the front.

In the embodiment shown in FIG. 2, one fuel supply pipe 2 is provided with a plurality of nozzles 4 arranged along the lateral direction D1, but the present disclosure is not limited to this embodiment. The duct burner 1 may be equipped with a fuel supply pipe 2 extending along the vertical direction D2 and a plurality of nozzles 4 provided in the fuel supply pipe 2 in line along the vertical direction D2. In this case, the pair of plate members 8A, 8B is on opposite sides of the nozzle 4 in the lateral direction D1.

In an embodiment, as shown in FIG. 2, the duct burner 1 further includes an ignition device 30 for igniting the gas fuel F. The ignition device 30 is disposed in the duct 122 and is located downstream of the nozzle 4 in the exhaust gas passage 120. The ignition device 30 only needs to be configured to ignite the gas fuel F. For example, a pilot ignition may be applied to ignite the gas fuel F with a flame formed by a small burner, or a direct ignition may be applied to ignite the gas fuel F with a spark discharge from a spark plug. The ignition device 30 may be provided for each fuel supply pipe 2. Of the plurality of nozzles 4 in one fuel supply pipe 2, the nozzle 4 closest to the ignition device 30 is an ignition nozzle 20 (4). The plurality of nozzles 4 in one fuel supply pipe 2 includes a left nozzle 40 (4) and a right nozzle 42 (4) to the right of the left nozzle 40. The configuration of the ignition nozzle 20, left nozzle 40, and right nozzle 42 will be described below.

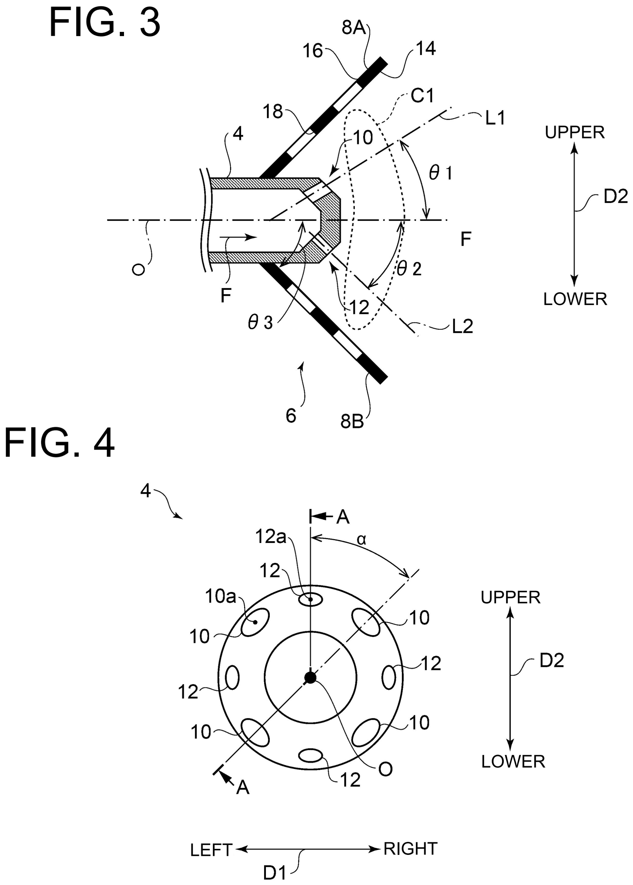

FIG. 3 is a side cross-sectional view of the nozzle 4 according to an embodiment. As shown in FIG. 3, the nozzle 4 has a main hole 10 and an auxiliary hole 12. The auxiliary hole 12 is configured to inject the gas fuel F along a flame holding surface 14 of the upper plate member 8A or the lower plate member 8B on the downstream side of the exhaust gas passage 120. The main hole 10 is larger in diameter than the auxiliary hole 12. The main hole 10 is configured to inject the gas fuel F at an inclination toward the central axis O of the nozzle 4 relative to the auxiliary hole 12.

A specific configuration example of the main hole 10 and the auxiliary hole 12 according to an embodiment will be described. Each of the main hole 10 and the auxiliary hole 12 extends in a straight line. The angle formed by the imaginary first line L1 extending in the injection direction of the main hole 10 and the central axis O of the nozzle 4 is the main hole injection angle θ1. The angle formed by the imaginary second line L2 extending in the injection direction of the auxiliary hole 12 and the central axis O of the nozzle 4 is the auxiliary hole injection angle θ2. The main hole injection angle θ1 is not less than 20 degrees and less than 40 degrees. The auxiliary hole injection angle θ2 is not less than 40 degrees and less than 50 degrees.

As shown in FIG. 3, each of the upper plate member 8A and the lower plate member 8B extends so as to diverge from the central axis O of the nozzle 4 toward the downstream side of the exhaust gas passage 120. The upper plate member 8A and the lower plate member 8B are line-symmetrical with respect to the central axis O of the nozzle. Each of the upper plate member 8A and the lower plate member 8B is configured such that the angle θ3 of the flame holding surface 14 with respect to the central axis O of the nozzle 4 is not less than 40 degrees and not more than 50 degrees. In an embodiment, the angle θ3 of the flame holding surface 14 is 45 degrees. The angle θ3 of the flame holding surface 14 is equal to the auxiliary hole injection angle θ2.

Each of the upper plate member 8A and the lower plate member 8B has a plurality of through holes 18 extending from the flame holding surface 14 to a surface 16 opposite the flame holding surface 14. The opening ratio, the ratio of the area of the plurality of through holes 18 to the area of the flame holding surface 14 including the area of the plurality of through holes 18, is not less than 20% and not more than 50%. The number of through holes 18 is not limited and may be one or two or more.

FIG. 4 is a schematic configuration diagram of the nozzle 4 according to an embodiment, and the nozzle 4 is viewed from the downstream side of the exhaust gas passage 120 (front view). In an embodiment, as shown in FIG. 4, the nozzle 4 has four main holes 10 and four auxiliary holes 12. The four main holes 10 are arranged around the central axis O of the nozzle 4 symmetrically with respect to the central axis O of the nozzle. The four auxiliary holes 12 are arranged around the central axis O of the nozzle 4 symmetrically with respect to the central axis O of the nozzle. The four main holes 10 and the four auxiliary holes 12 are alternately and evenly distributed around the central axis O of the nozzle 4. In other words, they are arranged around the central axis O of the nozzle 4 with an equal pitch angle α of 45 degrees. In the front view, a center position 10a of the opening of the main hole 10 and a center position 12a of the opening of the auxiliary hole 12 have the same distance from the central axis O of the nozzle 4. In addition, the main hole 10 and the auxiliary hole 12 have circular cross-sectional shapes.

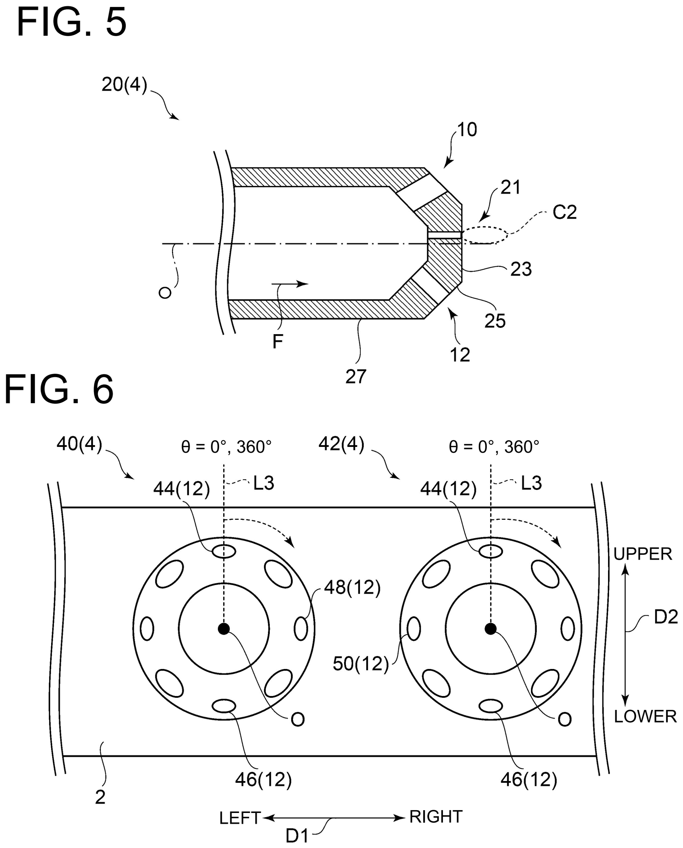

FIG. 5 is a schematic configuration diagram of an ignition nozzle 20 according to an embodiment. As shown in FIG. 5, the ignition nozzle 20 has a small-diameter hole 21 configured to inject the gas fuel F from a position closer to the central axis O of the nozzle 4 than the four main holes 10 and the four auxiliary holes 12. The small-diameter hole 21 is smaller in diameter than each of the four auxiliary holes 12. In the embodiment shown in FIG. 5, the small-diameter hole 21 extends in a straight line along the central axis O of the nozzle 4. The small-diameter hole 21 is located inward of the four main holes 10 and the four auxiliary holes 12 in the radial direction of the nozzle 4. The small-diameter hole 21 is formed in a tip end surface 23 of the ignition nozzle 20. The main holes 10 and the auxiliary holes 12 are formed in an extension surface 27 extending from the tip end surface 23 of the ignition nozzle 20 to the side 25. In some embodiments, when the angle formed by the imaginary line extending in the injection direction of the small-diameter hole 21 and the central axis O of the nozzle 4 is the small-diameter hole injection angle, this small-diameter hole injection angle is smaller than the main hole injection angle θ1 and the auxiliary hole injection angle θ2. Also in the nozzle 4 illustrated in FIG. 3, the main holes 10 and the auxiliary holes 12 are formed in the extension surface.

FIG. 6 is a schematic configuration diagram of a left nozzle 40 (4) and a right nozzle 42 (4) according to an embodiment. As shown in FIG. 6, when the duct burner 1 is viewed from the downstream side of the exhaust gas passage 120, the angular position θ of the imaginary line L3 that extends upward from the central axis O of the nozzle 4 is defined as 0 degrees. This angular position θ increases clockwise about the central axis O of the nozzle 4, and the angular position θ when the imaginary line L3 makes one full rotation is defined as 360 degrees.

In the embodiment shown in FIG. 6, each of the left nozzle 40 and the right nozzle 42 has an upper auxiliary hole 44 (12) at an angular position θ of not less than 0 degrees and not more than 10 degrees or not less than 350 degrees and not more than 360 degrees, and a lower auxiliary hole 46 (12) at an angular position θ of not less than 170 degrees and not more than 190 degrees, as ones of the plurality of auxiliary holes 12. The left nozzle 40 has a right auxiliary hole 48 (12) at an angular position θ of not less than 80 degrees and not more than 100 degrees. The right nozzle 42 has a left auxiliary hole 50 (12) at an angular position θ of not less than 260 degrees and not more than 280 degrees.

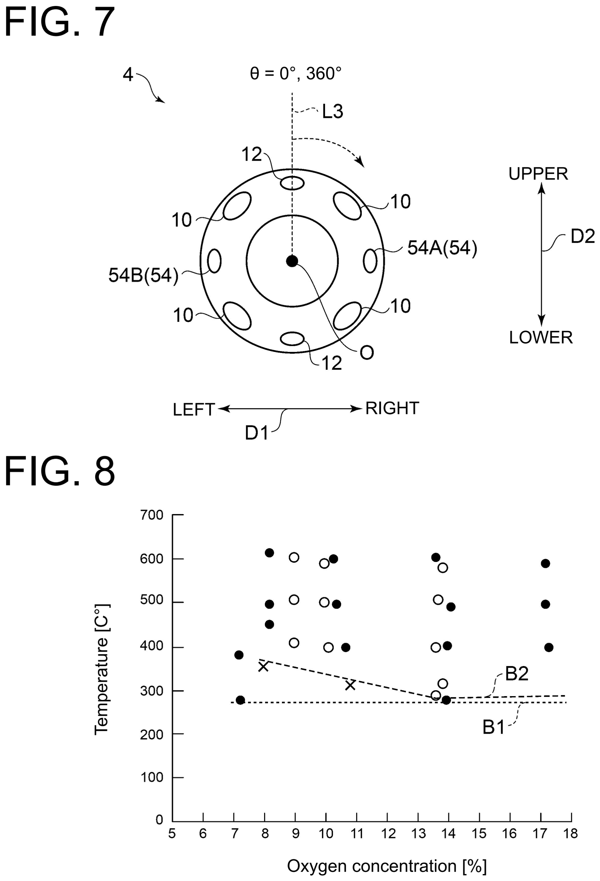

FIG. 7 is a schematic configuration diagram of the nozzle 4 according to some embodiments. In the embodiment shown in FIG. 7, the nozzle 4 further includes a second auxiliary hole 54 in addition to the main hole 10 and the auxiliary hole 12. The second auxiliary hole 54 includes a right second auxiliary hole 54A (54) at an angular position θ of not less than 80 degrees and not more than 100 degrees, and a left second auxiliary hole 54B (54) at an angular position θ of not less than 260 and not more than 280 degrees. The second auxiliary hole 54 is configured to inject the gas fuel F at an injection angle of not less than 50 degrees and not more than 90 degrees with respect to the central axis O of the nozzle 4. Since the pair of plate members 8A, 8B is not located in the lateral direction D1 of the nozzle 4, the second auxiliary hole 54 is not configured to inject the gas fuel F along the flame holding surface 14, but rather prioritizes the improvement of the flame holding effect. The injection angle of the second auxiliary hole 54 is larger than the auxiliary hole injection angle θ2. The second auxiliary hole 54 may have the same diameter as the auxiliary hole 12, or may have a different diameter from the auxiliary hole 12.

According to the embodiment shown in FIG. 7, the second auxiliary hole 54 has a larger injection angle than the right auxiliary hole 48 and the left auxiliary hole 50 illustrated in FIG. 6. This indicates that the gas fuel F injected from the second auxiliary hole 54 can reach an adjacent nozzle 4 in a shorter distance than the gas fuel F injected from the right auxiliary hole 48 or the left auxiliary hole 50. Thus, the nozzle 4 with the second auxiliary hole 54 can quickly ignite the nozzle 4 adjacent to this nozzle 4.

### (Operation and Effect)

The operation and effect of the duct burner 1 according to an embodiment will be described. FIG. 8 is a diagram showing whether stable combustion has been achieved in the duct burner 1 according to an embodiment, which is a graph with the oxygen concentration of the exhaust gas G on the horizontal axis and the temperature of the exhaust gas G on the vertical axis. Stable combustion in the duct burner 1 means a state in which the duct burner 1 forms a flame by combustion of the gas fuel F. The oxygen concentration of the exhaust gas G is the concentration of oxygen in the exhaust gas G that flows into the duct burner 1. The temperature of the exhaust gas G is the temperature of the exhaust gas G that flows into the duct burner 1.

In FIG. 8, • means that stable combustion has been achieved in the duct burner 1 according to an embodiment, o means that stable combustion has been achieved in a duct burner with conventional nozzles, and x means that stable combustion has not been achieved in the duct burner with conventional nozzles. The conventional nozzle has only a plurality of main holes with the same injection angle, and no auxiliary holes. Also, the duct burner with conventional nozzles does not have flame holding mechanisms installed in the nozzles, so the nozzle base is blown away, and the flame is retained near a flame holder of the duct burner.

The oxygen concentration of the exhaust gas G and the temperature of the exhaust gas G are the main factors that determine whether stable combustion in the duct burner 1 takes place. If the oxygen concentration of the exhaust gas G is low, combustion in the duct burner 1 becomes unstable. Similarly, if the temperature of the exhaust gas G is low, combustion in the duct burner 1 becomes unstable. As shown in FIG. 8, the duct burner 1 according to an embodiment can achieve stable combustion even when the temperature of the exhaust gas G is 300°C, provided that the oxygen concentration in the exhaust gas G is 7% or higher. On the other hand, the conventional duct burner 1 cannot achieve stable combustion when the temperature of the exhaust gas G is 300°C and the oxygen concentration in the exhaust gas G is 8% or 11%. In the conventional duct burner 1, the temperature of the exhaust gas G must be higher than 300°C in order to achieve stable combustion with an oxygen concentration of 8% or 11% in the exhaust gas G. As shown in FIG. 8, in the low oxygen region (below 14%), the stable combustion boundary B1 of the duct burner 1 according to an embodiment is on the lower-temperature side relative to the stable combustion boundary B2 of the conventional duct burner. Thus, the duct burner 1 according to an embodiment can expand the conditions under which stable combustion can be achieved, as compared to the conventional duct burner 1.

The duct burner 1 may have difficulty achieving stable combustion due to a low oxygen concentration in the exhaust gas G. According to an embodiment, the auxiliary hole 12 injects the gas fuel F along the flame holding surface 14, which promotes mixing of the gas fuel F and the exhaust gas G in the region C1 (see FIG. 3) in the vicinity of where the gas fuel F is injected from the nozzle 4, thereby suppressing flame fluctuation and enhancing flame holding. Further, the main hole 10 injects the gas fuel F at an inclination toward the central axis O of the nozzle relative to the auxiliary hole 12, which promotes slow combustion due to long flame. In addition, it suppresses the generation of nitrogen oxides (NOx). This enables stable combustion in the duct burner 1.

According to an embodiment, by setting the injection angle θ1 of the main hole 10 (elevation angle with respect to the central axis O of the nozzle 4) to less than 40 degrees, slow combustion due to long flame can be promoted. On the other hand, if the injection angle θ1 of the main hole 10 is less than 20 degrees, the long flame becomes excessive and adversely affects the heat absorption characteristics of the heat recovery steam generator 130 supplied with the exhaust gas G heated by the duct burner 1. In addition, by setting the injection angle 02 of the auxiliary hole 12 to not less than 40 degrees, the gas fuel F is burned from the bottom of the tip portion of the nozzle 4, and the nozzle 4 can have a high flame holding effect. If the injection angle 02 of the auxiliary hole 12 is not less than 50 degrees, the auxiliary hole flame formed by combustion of the gas fuel F injected from the auxiliary hole 12 may come into contact with the flame holding surface 14, reducing the durability of the flame holder 6. On the other hand, if the injection angle θ2 of the auxiliary hole 12 is less than 40 degrees, the auxiliary hole flame is distant from the flame holder 6, reducing the flame holding effect. Therefore, stable combustion can be achieved in the duct burner 1 by setting the injection angle θ1 of the main hole 10 to not less than 20 degrees and less than 40 degrees and the injection angle θ2 of the auxiliary hole 12 to not less than 40 degrees and less than 50 degrees. The angle θ3 of the flame holding surface 14 is often set at 45 degrees. Therefore, when the injection angle θ2 of the auxiliary hole 12 is not less than 40 degrees and less than 50 degrees, the duct burner 1 can ensure a certain flame holding effect while preventing a decrease in the durability of the flame holder 6.

According to an embodiment, since each of the upper plate member 8A and the lower plate member 8B has the through holes 18, the amount of exhaust gas G supplied to the vicinity of where the gas fuel F is injected from the nozzle 4 can be adjusted. If the opening ratio is less than 20%, the amount of exhaust gas G that passes through the through holes 18 is small, resulting in an insufficient amount of exhaust gas G required to cool the flame holder 6, which may cause the flame holder 6 to become red-hot. If the opening ratio is more than 50%, the flame holding effect may be reduced depending on the type of gas fuel F. Therefore, according to an embodiment, since the opening ratio is not less than 20% and not more than 50%, the generation of NOx can be advantageously suppressed.

According to an embodiment, the ignition nozzle 20 has a small-diameter hole 21 configured to inject the gas fuel F from a position closer to the central axis O of the nozzle 4 than the four main holes 10 and the four auxiliary holes 12. This expands the region C2 (see FIG. 5) where the gas fuel F ignites and burns when the duct burner 1 starts. Thus, the ignition performance of the duct burner 1 can be improved.

According to an embodiment, the ignition nozzle 20 is disposed closest to the ignition device 30 among the plurality of nozzles 4. Thus, the ignition performance of the duct burner 1 can be improved without requiring that all or most of the nozzles 4 be ignition nozzles 20. The duct burner 1 may include a plurality of ignition nozzles 20. The ignition nozzle 20 may be other than the nozzle 4 closest to the ignition device 30 among the plurality of nozzles 4.

According to an embodiment, the four main holes 10 and the four auxiliary holes 12 are arranged alternately around the central axis O of the nozzle 4. As a result, the gas fuel F is injected evenly without bias to the central axis O of the nozzle 4 from the four main holes 10 and is injected evenly without bias to the central axis O of the nozzle 4 from the four auxiliary holes 12. This allows slow combustion due to long flame to continue smoothly.

The exhaust gas G passes through the through holes 18 formed in each of the upper plate member 8A and the lower plate member 8B and is supplied to the region C1 in the vicinity of where the gas fuel F is injected from the nozzle 4. In other words, the exhaust gas G is supplied from above or from below the nozzle 4. According to an embodiment, since each of the left nozzle 40 and the right nozzle 42 has the upper auxiliary hole 44 and the lower auxiliary hole 46, the gas fuel F injected from the upper auxiliary hole 44 and the lower auxiliary hole 46 can be quickly mixed with the exhaust gas G.

According to an embodiment, since the left nozzle 40 has the right auxiliary hole 48 and the right nozzle 42 has the left auxiliary hole 50, the left nozzle 40 can ignite the right nozzle 42, or the right nozzle 42 can ignite the left nozzle 40. If the diameter of the right auxiliary hole 48 or the left auxiliary hole 50 is made as large as that of the main hole 10, for example, the flame of the left nozzle 40 may come into contact with the flame of the right nozzle 42, raising the temperature and incurring the risk of generating NOx. Therefore, it is desirable that the auxiliary holes 12 open in the lateral direction D1.

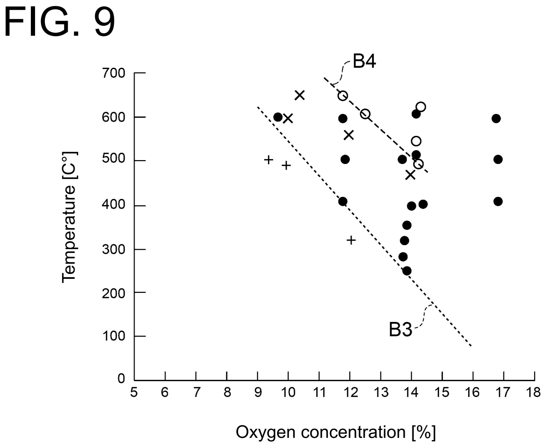

In an embodiment, the gas fuel F is hydrogen, but the present disclosure is not limited to this embodiment. In another embodiment, the gas fuel F is LPG. FIG. 9 is a diagram showing whether stable combustion has been achieved in the duct burner 1 according to the other embodiment, which is a graph with the oxygen concentration of the exhaust gas G on the horizontal axis and the temperature of the exhaust gas G on the vertical axis.

In FIG. 9, • means that stable combustion has been achieved in the duct burner 1 according to the other embodiment, and + means that stable combustion has been achieved in the duct burner 1 according to the other embodiment. Similarly, o means that stable combustion has been achieved in a duct burner with conventional nozzles, and x means that stable combustion has not been achieved in the duct burner with conventional nozzles.

As shown in FIG. 9, the duct burner 1 according to the other embodiment can achieve stable combustion even when the temperature of the exhaust gas G is 400°C, provided that the oxygen concentration in the exhaust gas G is 12%. On the other hand, the conventional duct burner 1 cannot achieve stable combustion when the temperature of the exhaust gas G is 400°C and the oxygen concentration in the exhaust gas G is 12%. In the conventional duct burner 1, the temperature of the exhaust gas G must be higher than 400°C (approximately 650°C) in order to achieve stable combustion with an oxygen concentration of 10% in the exhaust gas G. As shown in FIG. 9, in the low oxygen region (below 14%), the stable combustion boundary B3 of the duct burner 1 according to the other embodiment is on the lower-temperature side relative to the stable combustion boundary B4 of the conventional duct burner. Thus, the duct burner 1 according to the other embodiment can expand the conditions under which stable combustion can be achieved, as compared to the conventional duct burner 1.

The contents described in the above embodiments would be understood as follows, for instance.
[1] A duct burner (1) according to the present disclosure is a duct burner disposed in an exhaust gas passage (120) through which exhaust gas (G) discharged from a gas turbine (110) flows, including: at least one nozzle (4) for injecting gas fuel (F) into the exhaust gas passage; and a flame holder (6) including a pair of plate members (8A, 8B) disposed on opposite sides of the nozzle and extending so as to diverge from a central axis (O) of the nozzle toward a downstream side of the exhaust gas passage. The nozzle includes at least one auxiliary hole (12) configured to inject the gas fuel along a flame holding surface (14) of the plate members on the downstream side of the exhaust gas passage; and at least one main hole (10) having a larger diameter than the auxiliary hole and configured to inject the gas fuel at an inclination toward the central axis of the nozzle relative to the auxiliary hole.

Duct burners may have difficulty achieving stable combustion due to a low oxygen concentration in the exhaust gas. With the above configuration [1], the auxiliary hole injects the gas fuel along the flame holding surface, which promotes mixing of the gas fuel and the exhaust gas in the vicinity of where the gas fuel is injected from the nozzle, thereby suppressing flame fluctuation and enhancing flame holding. Further, the main hole injects the gas fuel at an inclination toward the central axis of the nozzle relative to the auxiliary hole, which promotes slow combustion due to long flame (In addition, it suppresses the generation of nitrogen oxides). This enables stable combustion in the duct burner.

[2] In some embodiments, in the above configuration [1], the main hole is configured to have an injection angle (θ1) of not less than 20 degrees and less than 40 degrees with respect to the central axis of the nozzle. The auxiliary hole is configured to have an injection angle (02) of not less than 40 degrees and less than 50 degrees with respect to the central axis of the nozzle. An angle (θ3) of the flame holding surface with respect to the central axis of the nozzle is not less than 40 degrees and not more than 50 degrees.

With the above configuration [2], by setting the injection angle of the main hole (elevation angle with respect to the central axis of the nozzle) to less than 40 degrees, slow combustion due to long flame can be promoted. On the other hand, if the injection angle of the main hole is less than 20 degrees, the long flame becomes excessive and adversely affects the heat absorption characteristics of the exhaust heat boiler supplied with the exhaust gas heated by the duct burner. In addition, by setting the injection angle of the auxiliary hole to not less than 40 degrees, the nozzle can have a high flame holding effect. Therefore, stable combustion can be achieved in the duct burner by setting the injection angle of the main hole to not less than 20 degrees and less than 40 degrees and the injection angle of the auxiliary hole to not less than 40 degrees and less than 50 degrees.

[3] In some embodiments, in the above configuration [1] or [2], the plate member has at least one through hole (18) extending from the flame holding surface to a surface (16) opposite the flame holding surface.

With the above configuration [3], the amount of exhaust gas supplied to the vicinity of where the gas fuel is injected from the nozzle can be adjusted.

[4] In some embodiments, in the above configuration [3], the plate member has a plurality of the through holes. An opening ratio is not less than 20% and not more than 50%, where the opening ratio is a ratio of an area of the plurality of through holes to an area of the flame holding surface.

If the opening ratio is less than 20%, the amount of exhaust gas that passes through the through holes is small, resulting in an insufficient amount of exhaust gas required to cool the flame holder, which may cause the flame holder to become red-hot. If the opening ratio is more than 50%, the flame holding effect may be reduced depending on the type of gas fuel. With the above configuration [4], since the opening ratio is not less than 20% and not more than 50%, the generation of nitrogen oxides can be advantageously suppressed.

[5] In some embodiments, in any one of the above configurations [1] to [4], the at least one main hole includes a plurality of the main holes arranged around the central axis of the nozzle. The at least one auxiliary hole includes a plurality of the auxiliary holes arranged around the central axis of the nozzle. The at least one nozzle includes an ignition nozzle (20) with a small-diameter hole (21) having a smaller diameter than the auxiliary hole and configured to inject the gas fuel from a position closer to the central axis of the nozzle than the plurality of main holes and the plurality of auxiliary holes.

With the above configuration [5], the small-diameter hole injects the gas fuel from the position closer to the central axis of the nozzle than the plurality of main holes and the plurality of auxiliary holes, expanding the region where the gas fuel ignites and burns when the duct burner starts. Thus, the ignition performance of the duct burner can be improved.

[6] In some embodiments, in the above configuration [5], the duct burner further includes an ignition device (30) disposed in a duct (122) having an inner wall surface (124) that defines the exhaust gas passage. The at least one nozzle includes a plurality of the nozzles. The nozzle closest to the ignition device among the plurality of nozzles is the ignition nozzle.

With the above configuration [6], the ignition performance of the duct burner can be improved without requiring that all or most of the nozzles be ignition nozzles.

[7] In some embodiments, in any one of the above configurations [1] to [6], the at least one nozzle includes a plurality of the nozzles arranged along a lateral direction (D1). The pair of plate members is arranged along a vertical direction (D2).

With the above configuration [7], it is possible to provide a duct burner with a plurality of nozzles arranged along the lateral direction and a pair of plate members arranged along the vertical direction.

[8] In some embodiments, in the above configuration [7], the at least one main hole includes a plurality of the main holes. The at least one auxiliary hole includes a plurality of the auxiliary holes. The plurality of main holes and the plurality of auxiliary holes are arranged alternately around the central axis of the nozzle.

With the above configuration [8], the gas fuel is injected evenly without bias to the central axis of the nozzle from the plurality of main holes and is injected evenly without bias to the central axis of the nozzle from the plurality of auxiliary holes. This allows slow combustion due to long flame to continue smoothly.

[9] In some embodiments, in the above configuration [8], the plurality of nozzles includes a left nozzle (40) and a right nozzle (42) adjacent to a right side of the left nozzle. When the duct burner is viewed from the downstream side of the exhaust gas passage, an angular position (θ) is defined such that 0 degrees corresponds to an imaginary line (L3) that extends upward from the central axis of the nozzle, the angular position increases clockwise about the central axis of the nozzle, and the angular position reaches 360 degrees when the imaginary line completes one full rotation, and each of the left nozzle and the right nozzle has: an upper auxiliary hole (44) at the angular position of not less than 0 degrees and not more than 10 degrees or not less than 350 degrees and not more than 360 degrees as one of the plurality of auxiliary holes; and a lower auxiliary hole (46) at the angular position of not less than 170 degrees and not more than 190 degrees as one of the plurality of auxiliary holes.

The exhaust gas passes through the through holes formed in each of the pair of plate members arranged along the vertical direction and is supplied to the vicinity of where the gas fuel is injected from the nozzle. In other words, the exhaust gas is supplied from above or from below the nozzle. With the above configuration [9], since each of the left nozzle and the right nozzle has the upper auxiliary hole and the lower auxiliary hole, the gas fuel injected from the upper auxiliary hole and the lower auxiliary hole can be quickly mixed with the exhaust gas.

[10] In some embodiments, in the above configuration [9], the left nozzle has a right auxiliary hole at the angular position of not less than 80 degrees and not more than 100 degrees as one of the plurality of auxiliary holes. The right nozzle has a left auxiliary hole at the angular position of not less than 260 degrees and not more than 280 degrees as one of the plurality of auxiliary holes.

With the above configuration [10], the left nozzle can ignite the right nozzle, or the right nozzle can ignite the left nozzle.

[11] In some embodiments, in the above configuration [9], the nozzle further has a second auxiliary hole configured to inject the gas fuel at an injection angle of not less than 50 degrees and not more than 90 degrees with respect to the central axis of the nozzle. The second auxiliary hole is at the angular position of not less than 80 degrees and not more than 100 degrees or not less than 260 degrees and not more than 280 degrees.

With the above configuration [11], the second auxiliary hole has a larger injection angle than the right auxiliary hole and the left auxiliary hole described in [10]. Thus, the nozzle with the second auxiliary hole can quickly ignite the nozzle adjacent to this nozzle.

[12] In some embodiments, in any one of the above configurations [1] to [11], the gas fuel is hydrogen gas or hydrocarbon gas.

With the above configuration [12], stable combustion can be achieved in duct burners that use hydrogen gas or hydrocarbon gas.

[13] A gas turbine system according to the present disclosure includes a gas turbine using hydrogen gas as fuel; and the duct burner described in any one of [1] to [12].

With the above configuration [13], it is possible to provide a gas turbine system with a duct burner that achieves stable combustion.

### Reference Signs List

- 1: Duct burner
- 2: Fuel supply pipe
- 4: Nozzle
- 6: Flame holder
- 8A: Upper plate member
- 8B: Lower plate member
- 10: Main hole
- 12: Auxiliary hole
- 14: Flame holding surface
- 18: Through hole
- 20: Ignition nozzle
- 21: Small-diameter hole
- 30: Ignition device
- 40: Left nozzle
- 42: Right nozzle
- 44: Upper auxiliary hole
- 46: Lower auxiliary hole
- 48: Right auxiliary hole
- 50: Left auxiliary hole
- 54: Second auxiliary hole
- 100: Gas turbine system
- 110: Gas turbine
- 112: Compressor
- 113: Rotational shaft
- 114: Combustor
- 116: Turbine
- 120: Exhaust gas passage
- 122: Duct
- 124: Inner wall surface of duct
- 130: Heat recovery steam generator
- 140: Generator
- A1: Air
- A2: Compressed air
- A3: Fuel
- A4: Combustion gas
- D1: Lateral direction
- D2: Vertical direction
- F: Gas fuel
- G: Exhaust gas
- L1: First line
- L2: Second line
- L3: Imaginary line
- O: Central axis of nozzle

## Claims

1. A duct burner disposed in an exhaust gas passage through which exhaust gas discharged from a gas turbine flows, comprising:
at least one nozzle for injecting gas fuel into the exhaust gas passage; and
a flame holder including a pair of plate members disposed on opposite sides of the nozzle and extending so as to diverge from a central axis of the nozzle toward a downstream side of the exhaust gas passage,
wherein the nozzle has:
at least one auxiliary hole configured to inject the gas fuel along a flame holding surface of the plate members on the downstream side of the exhaust gas passage; and
at least one main hole having a larger diameter than the auxiliary hole and configured to inject the gas fuel at an inclination toward the central axis of the nozzle relative to the auxiliary hole.

2. The duct burner according to claim 1,
wherein the main hole is configured to have an injection angle of not less than 20 degrees and less than 40 degrees with respect to the central axis of the nozzle,
wherein the auxiliary hole is configured to have an injection angle of not less than 40 degrees and less than 50 degrees with respect to the central axis of the nozzle, and
wherein an angle of the flame holding surface with respect to the central axis of the nozzle is not less than 40 degrees and not more than 50 degrees.

3. The duct burner according to claim 1 or 2,
wherein the plate member has at least one through hole extending from the flame holding surface to a surface opposite the flame holding surface.

4. The duct burner according to claim 3,
wherein the plate member has a plurality of the through holes, and
wherein an opening ratio is not less than 20% and not more than 50%, where the opening ratio is a ratio of an area of the plurality of through holes to an area of the flame holding surface.

5. The duct burner according to claim 1 or 2,
wherein the at least one main hole includes a plurality of the main holes arranged around the central axis of the nozzle,
wherein the at least one auxiliary hole includes a plurality of the auxiliary holes arranged around the central axis of the nozzle, and
wherein the at least one nozzle includes an ignition nozzle with a small-diameter hole having a smaller diameter than the auxiliary hole and configured to inject the gas fuel from a position closer to the central axis of the nozzle than the plurality of main holes and the plurality of auxiliary holes.

6. The duct burner according to claim 5, further comprising an ignition device disposed in a duct having an inner wall surface that defines the exhaust gas passage,
wherein the at least one nozzle includes a plurality of the nozzles, and
wherein the nozzle closest to the ignition device among the plurality of nozzles is the ignition nozzle.

7. The duct burner according to claim 1 or 2,
wherein the at least one nozzle includes a plurality of the nozzles arranged along a lateral direction, and
wherein the pair of plate members is arranged along a vertical direction.

8. The duct burner according to claim 7,
wherein the at least one main hole includes a plurality of the main holes,
wherein the at least one auxiliary hole includes a plurality of the auxiliary holes, and
wherein the plurality of main holes and the plurality of auxiliary holes are arranged alternately around the central axis of the nozzle.

9. The duct burner according to claim 8,
wherein the plurality of nozzles includes a left nozzle and a right nozzle adjacent to a right side of the left nozzle, and
wherein, when the duct burner is viewed from the downstream side of the exhaust gas passage, an angular position is defined such that 0 degrees corresponds to an imaginary line that extends upward from the central axis of the nozzle, the angular position increases clockwise about the central axis of the nozzle, and the angular position reaches 360 degrees when the imaginary line completes one full rotation, and
each of the left nozzle and the right nozzle has:
an upper auxiliary hole at the angular position of not less than 0 degrees and not more than 10 degrees or not less than 350 degrees and not more than 360 degrees as one of the plurality of auxiliary holes; and
a lower auxiliary hole at the angular position of not less than 170 degrees and not more than 190 degrees as one of the plurality of auxiliary holes.

10. The duct burner according to claim 9,
wherein the left nozzle has a right auxiliary hole at the angular position of not less than 80 degrees and not more than 100 degrees as one of the plurality of auxiliary holes, and
wherein the right nozzle has a left auxiliary hole at the angular position of not less than 260 degrees and not more than 280 degrees as one of the plurality of auxiliary holes.

11. The duct burner according to claim 9,
wherein the nozzle further has a second auxiliary hole configured to inject the gas fuel at an injection angle of not less than 50 degrees and not more than 90 degrees with respect to the central axis of the nozzle,
wherein the second auxiliary hole is at the angular position of not less than 80 degrees and not more than 100 degrees or not less than 260 degrees and not more than 280 degrees.

12. The duct burner according to claim 1 or 2,
wherein the gas fuel is hydrogen gas or hydrocarbon gas.

13. A gas turbine system, comprising:
a gas turbine using hydrogen gas as fuel; and
the duct burner according to claim 1 or 2.
